# EUROPEAN PATENT SPECIFICATION

(11) **EP 2 709 960 B1**
(45) Date of publication and mention of the grant of the patent: **08.11.2017**
(21) Application number: 11761321.6
(22) Date of filing: 13.09.2011
(51) Int. Cl.: C02F 1/50, C02F 1/76, D21H 21/04, C02F 103/28

(54) **METHOD FOR REDUCING THE BIOLOGICAL CONTAMINATION IN A PAPER PRODUCTION PROCEDURE.**
VERFAHREN ZUR VERMINDERUNG DER BIOLOGISCHEN KONTAMINATION BEI EINEM PAPIERHERSTELLUNGSVERFAHREN
PROCÉDÉ DE RÉDUCTION DE LA CONTAMINATION BIOLOGIQUE DANS UN PROCÉDÉ DE PRODUCTION DE PAPIER

(30) Priority: 09.06.2011 IT MI20111037
(43) Date of publication of application: 26.03.2014
(73) Proprietor: Acquaflex S.r.l., 20010 Cornaredo (MI) (IT)
(72) Inventor: BRATUS, Riccardo, I-20142 Milano (IT); BAGGIO, Verbena, I-21052 Busto Arsizio (VA) (IT)
(74) Representative: Mittler, Enrico
(86) International application number: PCT/EP2011/065857
(87) International publication number: WO 2012/167845

(56) References cited:
- WO-A1-2006/097578
- WO-A1-2009/143511
- US-A1- 2002 003 114

## Description

The present invention concerns a method for reducing the biological water contamination in a system for the production of paper and/or wood pulp.

In particular, the present invention relates to a method for reducing the biological water contamination in a system for the production of paper and/or wood pulp in presence of chemical products sensitive to high redox potential compounds.

It is known that the basic products for the production of paper are of vegetable origin, such as conifers or broad-leaf plants, remains of annual plants, such as graminaceous plants, and textile fiber residues, named linters, or long fiber residues. Recovered products, such as paper and cardboard, are also used.

The product for the production of paper is cellulose obtained in particular from timber trees.

It is further known that the first operation related to paper manufacturing is pulping the fibers, which occurs in pulpers. After this, the cellulose is refined in refiners and the fibers (refined cellulose, wood paste, recovered fibers etc.) are sent to the mixing chest where fillers and additives are also added, such as for example glue, dyes and optical bleaches.

The pulp flows from here into the machine chest. At this point, stock concentration is high and generally never less than 3.5-4.0%. The stock must be diluted for the subsequent steps of the process. This occurs in a mixing pump of considerable capacity (fan pump) in which the stock is diluted from 1.0% to 0.4% according to the grade and type of paper to be obtained.

Dilution is carried out by using water from the manufacturing cycle coming from wire drain (named white water). The diluted stock is now purged in order to separate the heavier impurities by exploiting centrifuge action.

Purging mainly occurs in vortex cleaners and centriscreens. The accepted purged matter is sent to the headbox, the function of which is to feed the pulp onto the wire or cylinder former. The pulp dragged by the wire looses 70-97% of the water present. Draining is facilitated by the pressure created by the presence of rollers and foils arranged under the wire and in the suction boxes. A suction cylinder finally extracts more water from the sheet. After the suction cylinder step, the sheet passes from the wire to a wet press system which presses the sheet between felts to squeeze out part of the residual water and compact the sheet.

The wire freed from the sheet goes back, running in the lower part of the continuous machine, fibers and deposits are washed away by spraying water and the wire moves back up to receive new pulp.

The sheet enters the dryer section after the wet press step. The dryer section consists of numerous cylinders (or, in the case of tissue paper, a single large cylinder named Yankee dryer) into which pressurized steam is conveyed. Finally, after smoothing and pressing, the sheet is wound on a reel on a winder.

Part of the white water is sent to the flotation units or sedimenters in which the pulp remaining in the water after the formation process of the sheet on the wire is separated. The recovered water, called clarified water, is collected in the clarified water chests and used to dilute the stock.

It is also known that operations related to timber processing consist initially in debarking and grinding. The fibrous suspension obtained after grinding is filtered by means of perforated plates called vibrating screens. The accepted material proceeds along the main line, while the material which is stopped by the basket is conveyed to the reject line. At this point, the accepted material must pass a further centrifuge purging step carried out by means of a series of cleaners arranged in cascade.

The stock thus thickened is then collected in a chest and set to the various refining stages and finally to the step of whitening.

After said step of whitening, the cellulose is repeatedly washed to remove traces of the chemical products used. At this point, if the paper mill itself has carried out the treatment, the cellulose passes directly to refining, otherwise it is dewatered and dried, cut into sheets and bound into wads.

However, it is known that the paper mill water and/or wood pulp production water contains a high amount of micro-organisms which produce a biofilm during their growth.

The presence of such a biofilm in the water of a system for the production of paper and/or wood pulp causes many drawbacks, such as for example, the onset of bad smells, the detachment of deposits which lead to faults present on the paper, breakage of the paper with consequent machine stops and production loss and the formation of corrosion in the system due to interstitial corrosion.

It is equally known that different types of paper are produced for different uses.

Examples of such paper are blotting paper, which must have good breakage strength and good liquid absorbing properties, toilet paper, which must instead dissolve rapidly in waste water, facial tissue paper, which must associate resistance to moisture and softness, napkin paper, packing paper generally made with recycled paper, printing paper, drawing paper, which must be waterproof, tough and have a uniform surface, glossy paper for magazines, special paper used for books, banknotes, wine label backing and many other types of special papers.

The various properties of the aforesaid types of paper are imparted by the presence of chemical products introduced during the paper production procedure itself.

Typical chemical products useful for having paper resistant to humidity are, for example, polyamidoamine epichlorohydrin resins, melamine formaldehyde resins and polyacrylamide-glyoxal copolymers. Alkylketenedimer, natural colophony and alkenyl succinic anhydrides are instead used, for example, when a glued paper, i.e. one which opposes resistance to the penetration of water and aqueous liquids, is required.

Such chemical products must remain intact during the entire paper production procedure and then remain in the resulting paper in order to impart the required effect.

Currently, the following strongly oxidizing agents are used in order to reduce the contamination caused by undesired biological deposits produced by the raw materials used in the production process of paper and/or wood pulp: a) sodium hypochlorite, b) chlorine dioxide prepared in situ, c) sodium hypobromite prepared in situ by mixing sodium or potassium salt with sodium hypochlorite, d) peracetic acid, e) bromochlorodimethylhydantoin and dibromodimethylhydantoin, f) trichloro isocyanurate and g) bromine monochloride in stabilizing solutions.

However, a first drawback of the aforesaid strong oxidizing agents is that of excessively increasing the redox potential of the system with respective interference with the aforesaid chemical products which are used in the step of production of the paper and/or wood pulp for the purpose of conferring different properties to the resulting paper.

Furthermore, the presence of strong oxidizing agents in a system for the production of paper and/or wood pulp increases the corrosion speed of the system itself over time.

A second disadvantage is that the aforesaid strong oxidizing agents release amounts of bromine and/or chloride in gaseous state, high doses of which are toxic, produce a bad odor and are dangerous for the health of operators.

Again, it is also known the use of a formula consisting of bromoamine and hypobromous acid prepared in situ by mixing ammonium bromide with hypochlorite at predetermined pH and stoichiometry with the purpose of
reducing the contamination carried by undesired biological deposits produced by the raw materials used in the paper and/or wood pulp production process.

However, the aforesaid formula also has many drawbacks, such as for example the fact of requiring very close monitoring of the dosing and pH parameters and the use of high purity hypochlorite with controlled alkalinity in order to avoid triggering an explosive reaction with the formation of toxic fumes and creating problems with regards to waste water regulations and probable nitrogen oxides generated by reaction with hypochlorite.

It is thus still very felt the need to find a method for reducing biological contamination in water in a system for the production of paper and/or wood pulp which allows to overcome the aforesaid drawbacks and which is capable, at the same time, of not interacting with the chemical products present in the paper and/or wood pulp production process.

WO 2006/097578 relates to a method for inhibiting the growth of microorganisms in fresh water or circulating water in a paper making or cardboard makimg process comprising adding to the water separately and essentially continuously an oxidant and a bromine source. There is mentioned the use of sodium hypochlorite as preferred oxidant and of bromochlorodimethylhydantoin (BCDMH) come preferred bromine source (page 3, lines 14-23).

WO 2009/143511 relates to a process per controlling the growth of a biofilm or of a microorganism in an aqueous system such as a pulp, paper or board manufacturing system in which halogenated hydantoin is added to the aqueous system in combination with haloamine, chlorine dioxide or a combination thereof.

Now, it has been surprisingly found that the addition, at least in a wet end of a system for the production of paper and/or wood pulp, as recited in claim 1.

It is thus a first object of the present invention a method for reducing the biological contamination in the water of a system for the production of paper and/or wood pulp characterized in that it comprises the step of adding, in at least a wet end of said system, a bromine-based oxidant obtainable by mixing sodium hypochlorite with a composition comprising 5,5-dimethylimidazolidin-2,4-dione, an alkaline bromine salt and other acceptable ingredients. According to the present invention, the alkaline bromine is sodium bromide. Advantageously, a bromine-based oxidant is obtained in situ by mixing said sodium hypochlorite in an amount comprised between 0.1% and 40% by weight, with said composition comprising said 5,5-dimethylimidazolidin-2,4-dione in an amount comprised between 0.1% and 35% by weight and said alkaline bromine salt in an amount comprised between 0.1% and 60% by weight.

Even more advantageously, said bromine-based oxidant of the present invention is obtained in situ by mixing said sodium hypochlorite in an amount comprised between 5% and 33% by weight, with said composition comprising said 5,5-dimethylimidazolidin-2,4-dione in an amount comprised between 5% and 15% by weight and said alkaline bromine salt in an amount comprised between 10% and 45% by weight.

A preferred example of said bromine-based oxidant of the present invention is obtained in situ by mixing in 1:1 ratio by weight said sodium hypochlorite in an amount of 14% by weight with said composition comprising said 5,5-dimethylimidazolidin-2,4-dione in an amount of 6% by weight and said alkaline bromine salt in an amount of 40% by weight.

After a long study, the Applicant found that when the bromine-based oxidant of the present invention was obtained by mixing sodium hypochlorite with a composition comprising 5,5-dimethylimidazolidin-2,4-dione and said alkaline bromine salt not respecting the ratio indicated above, i.e. mixing a greater amount of hypochlorite, the obtained product reduced the aforesaid advantages determining for higher ratios (higher than 10:1) an increase of the redox potential comparable to that of use of hypochlorite alone, with respective effects on oxidable chemicals. When, instead, the bromine-based oxidant of the present invention was obtained by mixing sodium hypochlorite with a composition comprising 5,5-dimethylimidazolidin-2,4-dione and said alkaline bromine salt dosing a lower amount of hypochlorite with respect to those indicated above (lower than 1:5), the resulting product led to the formation of a more stable intermediate reaction, thus decreasing the biocide effect of the product and increasing the biostatic effect thereof. According to the present invention, the mixing of said sodium hypochlorite with a composition comprising 5,5-dimethylimidazolidin-2,4-dione and said alkaline bromine salt is carried out in a mixer directly connected to a wet end of said system for the production of paper and/or wood pulp. The bromine-based oxidant used in the method of the present invention contains additional chemically acceptable ingredients such as, for example, a wetting agent which increases the efficacy of the bromine-based oxidant itself allowing its action not only on the surface of the biofilm formed by the contaminating micro-organisms but also inside. The wetting agent to be used in the method according to the present invention is poly(oxy-1,2-ethanediyl), alpha-(carboxymethyl)-omega-((2-ethylhexyl)oxy)- (CAS number 107600-33-9) sold by Rhodia under the trademark of Geropon HW25 or by Kao Chemicals GmbH under the trademark of Akypo LF6.

Preferably, in a system for the production of paper according to the present invention, said wet end is chosen from the group comprising machine chest, white water system, feeding piping to flotation units and piping exiting the flotation units.

Preferably, in a system for the production of wood pulp of the present invention, said wet end is chosen from the group comprising stocking waters and entry waters.

In this description and in the appended claims, the word "biofilm" means a polysaccharide-based film produced by contaminating micro-organisms present in the paper mill water and in the water for the production of wood pulp. Such contaminating micro-organisms are, for example, aerobic bacteria, molds, yeasts, anaerobic bacteria, in particular sulfate-reducing anaerobic bacteria, such as, for example, those belonging to the Enterobacteriaceae and E.coli.

In the present description and in the appended claims, the expression "wet end" means a zone of a system for the production of paper and/or the production of wood pulp in which water is present.

In the present description and in the enclosed claims the expression "other chemically acceptable ingredients", with reference to the composition of the invention comprising 5.5-dimethylimidazolidin-2.4-dione and alkaline bromide salt, ingredients are intended such as a wetting agent as poly(oxy-1.2-ethanediyl), alpha-(carboxymethyl)-omega-((2-etylhexyl)oxy), water and sodium dioxide.

In particular, such wet ends may be present in said system during the step of debarking, the step of grinding and the step of whitening described above with reference to a system of the traditional type for the production of wood pulp.

Specific examples of such wet ends present in a system for the production of paper are the mixing chest, the machine chest, headbox, headbox damper, first water silos or tower, clarified water chest, flotation unit feeding pipes and flotation unit outlet pipes, the second water chest, the mixing pump, the constant level box and the wire drains of said system.

The advantages of the composition of the present invention are immediately apparent from the above.

A first advantage is that the method of the present invention uses a bromine-based oxidant which does not contain ammonia salts capable of gradually releasing hypobromous acid thus avoiding an excessive increase of the redox potential of the system and limiting at the same time the respective interference with the chemical products present in the system for the production of paper and/or wood pulp.

A second advantage is that the method according to the present invention uses a bromine-based oxidant capable of gradually releasing hypobromous acid thus allowing to reduce the biological contamination due to the growth of biofilm in the wet ends of the system in controlled manner.

A third advantage is that the method according to the present invention uses a bromine-based oxidant capable of gradually releasing hypobromous acid thus decreasing the hypochlorite and/or hypobromite odor.

A fourth advantage is that the method of the present invention uses a bromine-based oxidant capable of gradually releasing hypobromous acid produced in situ thus increasing the stability of the oxidant itself also in zones of the system distant from the dosing points.

A fifth advantage is that the method according to the present invention uses a bromine-based oxidant capable of gradually releasing hypobromous acid thus limiting the corrosion speed of the system.

A further advantage is that the method according to the present invention is simple, rapid and safe and may be applied to one or more wet ends of the systems for the production of paper and/or wood pulp without requiring close monitoring of the dosing, pH and quality parameters of the commercial sodium hypochlorite.

The following examples are provided to illustrate the present invention without however limiting it in any manner.

In all the following samples, the evaluations concerning the biological contamination reduction capacity of the method of the present invention are carried out according to traditional methods by taking directly from the system water and carrying out measurements on site.

Microbiological monitoring was carried out by inoculating the specimens to be analyzed on selective growth surfaces for the single bacteria families prepared on dishes. In particular, colorless agar was used for aerobic bacteria, Rose Bengal for molds and yeasts, iron sulfate based nutrient for sulfate-reducing anaerobic bacteria, VRB agar modified with glucose and lactose for Enterobacteriaceae and beta-glucuronidases for E.coli.

Furthermore, the total microbiological contamination was determined via bioluminescence. Such a method is based on the use of particular sticks in which an enzyme (luciferin-luciferase) is present capable of reacting with the ATP (present in all living organisms) generating bioluminescence. The amount of produced bioluminescence is proportional to the amount of ATP and thus the total bacterial contamination of the system. Bioluminescence was analyzed by means of the Hylite 2 photometer made by Merck, which converts the emission generated by the reaction into numeral value.

### Example 1

### Preparation of a bromine-based oxidant to be used in the method of the invention

**Composition 1:**

| Component | % by weight |
|---|---|
| Water | 63.1 |
| 5,5-dimethylimidazolidin-2,4-dione | 6.0 |
| Sodium bromide | 30.0 |
| Poly(oxy-1,2-ethanediyl), alpha-(carboxymethyl)-omega-(2-ethylhexyl)oxy- | 0.5 |
| Sodium hydroxide | 0.4 |

The bromine-based oxidant to be used in the method according to the present invention was prepared in situ in a traditional type mixer directly connected to the wet end of a system for the production of paper and/or wood pulp. In said mixer, the aforesaid Composition 1 was mixed with sodium hypochlorite 14% (in 1:1 ratio by weight) at ambient temperature. The formation of the desired bromine-based oxidant occurred rapidly and was observed to the unaided eye when the solution turned colorless from yellow.

The capacity of reducing the biological contamination by the bromine-based oxidant according to example 1 was evaluated by using, as specimen, stock taken from the machine chest of a paper mill located in north Italy which used wastepaper as raw material and produced test liners. The results are shown in table 1 below.

**Table 1**

| **Biological contamination reduction capacity** | | | | |
|---|---|---|---|---|
| | **Total anaerobic bacteria Ufc/ml** | **Mold Ufc/ml** | **Sulfate-reducing anaerobic bacteria Ufc/ml** | **Bioluminescence (RLU)** |
| **Machine chest** | | | | |
| **White** | 10⁷ | 10⁵ | 10⁴ | 87000 |
| 30 minutes | | | | |
| **Bromine-based oxidant Example 1** | | | | |
| 25 ppm | 10⁵ | 10⁴ | <10² | 61000 |
| 50 ppm | 10⁴ | 5x10³ | <10² | 26000 |
| 100 ppm | 10² | 10² | <10² | 11000 |
| 200 ppm | <10² | <10² | <10² | 4000 |

| **4 hours** | | | | |
|---|---|---|---|---|
| 25 ppm | 10⁵ | 10⁴ | 10³ | 74000 |
| 50 ppm | 10⁴ | 10⁴ | <10² | 35000 |
| 100 ppm | 10² | 10² | <10² | 15000 |
| 200 ppm | 10² | <10² | <10² | 6500 |

As apparent from Table 1, the bromine-based oxidant of the present invention determines both an abatement of the short-time microbiological counts (biocide effect) and maintains microbiological counts at low levels for a long period of time (preserving effect). The biocide effect is significant for different microbial species, such as anaerobic bacteria and anaerobic bacteria, and also for molds.

### Example 2

### Preparation of a bromine-based oxidant to be used in the method of the invention

**Composition 2:**

| Component | % by weight |
|---|---|
| Water | 63.10 |
| 5,5-dimethylimidazolidin-2,4-dione | 6.75 |
| Sodium bromide | 29.25 |
| Poly(oxy-1,2-ethanediyl), alpha-(carboxymethyl)-omega-(2-ethylhexyl)oxy- | 0.50 |
| Sodium hydroxide | 0.40 |

Similarly as described in Example 1, a second bromine-based oxidant to be used in the method of the present invention was prepared in situ by mixing the aforesaid Composition 2 with sodium hypochlorite 14% in different ratios.

The redox potential evaluation tests of the system were carried out on the formulas shown below.

| **Test** | **Sodium hypochlorite 14% (g)** | **Composition 2 (g)** | **Composition2/ hypochlorite** | **Dosed ppm** |
|---|---|---|---|---|
| 1 | 10 | 25 | 2.5 : 1 | 1000 |
| 2 | 20 | 25 | 1.25 : 1 | 1000 |
| 3 | 25 | 25 | 1 : 1 | 1000 |
| 4 | 30 | 25 | 1 : 1.2 | 1000 |
| 5 | 40 | 25 | 1 : 1.6 | 1000 |
| 6 | 20 | 0 | - | 1000 |

The results of this test are illustrated in Table 2 below.

**Table 2**

| Redox potential evaluation of the system | | | | | | |
|---|---|---|---|---|---|---|
| | **Test 1** | **Test 2** | **Test 3** | **Test 4** | **Test 5** | **Test 6** |
| Time | Redox delta | Redox delta | Redox delta | Redox delta | Redox delta | Redox delta |
| minutes | mv | mv | mv | mv | mv | mv |
| 0 | 0 | 0 | 0 | 0 | 0 | 0 |
| 2 | -62 | 21 | 22 | 162 | 406 | 410 |
| 4 | -40 | 29 | 28 | 166 | 315 | 350 |
| 6 | -28 | 33 | 30 | 166 | 317 | 348 |
| 8 | -16 | 29 | 34 | 166 | 319 | 340 |
| 10 | -4 | 39 | 35 | 167 | 319 | 337 |

As apparent from Table 2, the bromine-based oxidant of the present invention obtained by mixing hypochlorite with Composition 2 (Tests 1, 2, 3, 4 and 5) determines the formation of an intermediate composition which allows to obtain a decrease of the redox potential respect to solutions of sodium hypochlorite alone. This leads to a decrease of the interferences with other chemical products present in the system and a low corrosive power effect of the treated water.

### Example 3

### Preparation of a bromine-based oxidant to be used in the method of the invention

**Composition 3:**

| Component | % by weight |
|---|---|
| Water | 57.1 |
| 5,5-dimethylimidazolidin-2,4-dione | 7.0 |
| Sodium bromide | 35.0 |
| Poly(oxy-1,2-ethanediyl), alpha-(carboxymethyl)-omega-(2-ethylhexyl)oxy- | 0.5 |
| Sodium hydroxide | 0.4 |

Similarly as described in Example 1, a second bromine-based oxidant to be used in the method of the present invention was prepared in situ by mixing the aforesaid Composition 3 with sodium hypochlorite 14% in 1:1 ratio by weight.

In order to evaluate the control of the growth of micro-organisms by the bromine-based oxidant prepared according to Example 3 and of the variation of redox potential, Mixture A): bromine-based oxidant obtained in situ by mixing Composition 3 with sodium hypochlorite 14% in 1:1 ratio by weight and Mixture B): an oxidant formed only by 5,5-dimethylimidazolidin-2,4-dione 7% by weight and sodium hypochlorite 14% in 1:1 ratio by weight were compared. For the purpose of comparison, the amount of 5,5-dimethylimidazolidin-2,4-dione was added so as to have the same ratio by weight of imidazoline/hypochlorite in the system of Composition 3/hypochlorite 1:1.

The evaluation of the biological contamination reduction capacity of the bromine-based oxidant according to example 3 was evaluated by using, as specimen, clarified water taken from the polydisc filter outlet of a paper mill located in north-east Italy which uses wastepaper as raw material and produces brown packing paper.

The results are shown in Tables 3 and 4 below.

**Table 3**

| **Biological contamination reduction capacity** | | | | |
|---|---|---|---|---|
| | **Total anaerobic bacteria Ufc/ml** | **Mold Ufc/ml** | **Sulfate-reducing anaerobic bacteria Ufc/ml** | **Bioluminescence (RLU)** |
| **Clarified water** | | | | |
| **White** | 10⁷ | 10² | 10⁴ | 82000 |

| **30 minutes** | | | | |
|---|---|---|---|---|
| **Mixture A (Composition3/ hypochlorite) 50 ppm** | 10⁴ | <10² | 10² | 30000 |
| **Mixture A Composition3/ hypochlorite 100 ppm** | <10² | <10² | <10² | 2300 |
| **Mixture B (DMHO/hypochlorite) 50 ppm** | 10⁴ | <10² | 10² | 41000 |
| **Mixture B (DMHO/hypochlorite) 100 ppm** | <10² | <10² | <10² | 5400 |

| **4 hours** | | | | |
|---|---|---|---|---|
| **Mixture A (Composition3/ hypochlorite) 50 ppm** | 5 x 10⁴ | <10² | <10² | 40000 |
| **Mixture A Composition3/ hypochlorite 100 ppm** | 10² | <10² | <10² | 8000 |
| **Mixture B (DMH0/hypochlorite) 50 ppm** | 10⁵ | <10² | <10² | 65000 |
| **Mixture B (DMH0/hypochlorite) 100 ppm** | 10³ | <10² | <10² | 21000 |

As can be seen in Table 3, the addition of alkaline bromine salt in the mixture with dimethylimidazolidin has a better biocide efficacy than the hydantoin oxidant/hypochlorite; this can be observed in evident manner in the total microbiological contamination measurements carried out via bioluminescence, and, in general, is more relevant over time. Indeed, the improvement appears greater if measurements are carried out after 4 hours instead of after 30 minutes.

The results of the redox potential evaluation of the system are shown in Table 4 below.

**Table 4**

| Redox potential evaluation of the system | | |
|---|---|---|
| | Mixture B (DMHO/hypochlorite) 100 ppm | Mixture A Composition3/ hypochlorite 100 ppm |
| time | Redox delta | Redox delta |
| minutes | mv | mv |
| 0 | 0 | 0 |
| 2 | 145 | 38 |
| 4 | 173 | 60 |
| 6 | 187 | 72 |
| 8 | 192 | 84 |
| 10 | 196 | 96 |

As can be seen in Table 4, the Composition 3/sodium hypochlorite is a bromine-based oxidant capable of gradually releasing hypobromous acid, thus avoiding an excessive increase of the redox potential of the system. The aforesaid Table 4 indeed shows that the mixture confers a considerably lower redox potential to the system than the system formed by dimethylimidazolidin (DMH)/sodium hypochlorite alone.

### Example 4

Using Composition 2 a test was carried out to verify the effect of the mixture of Composition2/sodium hypochlorite 14% in 1:1 ratio by weight on polyamidoamine-epichlorohydrin-based wet strength resins with respect to treatment with sodium hypochlorite alone.

The test was carried out by dosing in an industrial stock of a paper mill located in north Italy 3.5% with respect to dry of a wet strength resin at 22% of a polyamidoamine-epichlorohydrin. 80 g/m2 sheets were prepared and the dry and wet strength of the sheet thus prepared (white, Test 1) was tested using a clip. The same was carried out by dosing after resin 1000 ppm of hypochlorite (Test 2) and finally a last test dosing 2000 ppm of a mixture Composition 2/hypochlorite 1:1 by weight (Test 3, so as to dose the same amount of hypochlorite). Table 5 shows the obtained results in which it is shows that the doses of the mixture of Composition 2/hypochlorite in 1:1 1 ratio by weight determines a lower decrease of the wet strength resin.

**Table 5**

| | | | Strength variation with respect to white | |
|---|---|---|---|---|
| | Dry strength (mN) | Wet strength (nN) | % dry | % wet |
| **Test 1 (White)** | 58808 | 9493 | | |
| **Test 2 (hypochlorite only)** | 52010 | 8009 | -11.6 | -15,6 |
| **Test 3 (Composition2/ hypochlorite mixture)** | 57110 | 9040 | -2.8 | -4.7 |

## Claims

1. Method for reducing the water biological contamination in a system for the production of paper and/or wood pulp **characterized in that** it comprises the step of mixing sodium hypochlorite in an amount lower than 1:5 with a composition comprising 5,5-dimethylimidazolidin-2,4-dione, sodium bromide, poly(oxy-1,2-ethanediyl) alpha-(carboxymethyl)-omega-((2-ethylhexyl)oxy)-, water and sodium hydroxide in a mixer directly connected to a wet end of said system for the production of paper and/or wood pulp, to obtain a bromine-based oxidant capable of gradually releasing hypobromous acid, avoiding an excessive increase of the redox potential of the system for producing paper and/or wood pulp.

2. Method according to claim 1, wherein said sodium hypochlorite is mixed in an amount comprised between 0.1% and 40% by weight with said composition comprising said 5,5-dimethylimidazolidin-2,4-dione in an amount comprised between 0.1% and 35% by weight and said sodium bromide in an amount comprised between 0.1% and 60% by weight, said poly(oxy-1,2-ethanediyl), alpha-(carboxymethyl)-omega-((2-ethylhexyl)oxy)- in an amount of 0.5% by weight, said water in an amount of comprised between 57,1 % and 63,1 % by weight and said sodium hydroxide in an amount of 0,4% by weight.

3. Method according to claim 2, wherein said sodium hypochlorite is mixed in an amount comprised between 5% and 33% by weight with said composition comprising said 5,5-dimethylimidazolidin-2,4-dione in an amount comprised between 5% and 15% by weight and said sodium bromide in an amount comprised between 10% and 45% by weight, said poly(oxy-1,2-ethanediyl), alpha-(carboxymethyl)-omega-((2-ethylhexyl)oxy)- in an amount of 0.5% by weight, said water in an amount of comprised between 57,1 % and 63,1 % by weight and said sodium hydroxide in an amount of 0,4% by weight.

4. Method according to claim 3, said sodium hypochlorite in an amount of 14% by weight with said composition comprising said 5,5-dimethylimidazolidin-2,4-dione in an amount of 6% by weight and said sodium bromide in an amount of 30% by weight.

5. Method according to any one of claims 1 to 4, wherein in a system for the production of paper, said wet area is selected from the group consisting of machine chest, waters of underscreen, feeding piping to flotation units and piping exiting the flotation units.

6. Method according to any one of claims 1 to 5, wherein in a system for the producing of wood pulp, said wet area is selected from the group consisting of stocking waters and entry waters.

## Patentansprüche

1. Verfahren zur Verringerung der wasserbiologischen Kontamination in einem System zur Herstellung von Papier und/oder Holzzellstoff, **dadurch gekennzeichnet, dass** es umfasst: den Schritt des Mischens von Natriumhypochlorit in einer Menge von weniger als 1:5 mit einer Zusammensetzung umfassend 5,5-Dimethylimidazolidin-2,4-dion, Natriumbromid, Poly(oxy-1,2-ethandiyl) alpha-(carboxymethyl)-omega-((2-ethylhexyl)oxy)-, Wasser und Natriumhydroxid in einem Mischer, welcher direkt verbunden ist mit einem Nassende des Systems zur Herstellung von Papier und/oder Holzzellstoff, um ein Brom-basiertes Oxidationsmittel zu erhalten, das in der Lage ist, Hypobromige Säure graduell freizusetzen, wodurch ein übermäßiger Anstieg des Redoxpotentials des Systems zur Herstellung von Papier und/oder Holzzellstoff vermieden wird.

2. Verfahren nach Anspruch 1, wobei das Natriumhypochlorit in einer Menge zwischen 0,1 und 40 Gew.-% mit der Zusammensetzung gemischt wird, welche umfasst: das 5,5-Dimethylimidazolidin-2,4-dion in einer Menge zwischen 0,1 und 35 Gew.-%, und das Natriumbromid in einer Menge zwischen 0,1 und 60 Gew.-%, das Poly(oxy-1,2-ethandiyl), alpha-(carboxymethyl)-omega-((2-ethylhexyl)oxy)- in einer Menge von 0,5 Gew.%, das Wasser in einer Menge von zwischen 57,1 und 63,1 Gew.-%, und das Natriumhydroxid in einer Menge von 0,4 Gew.-%.

3. Verfahren nach Anspruch 2, wobei das Natriumhypochlorit in einer Menge zwischen 5 und 33 Gew.-% mit der Zusammensetzung gemischt wird, welche umfasst: das 5,5-Dimethylimidazolidin-2,4-dion in einer Menge zwischen 5 und 15 Gew.-% und das Natriumbromid in einer Menge zwischen 10 und 45 Gew.-%, das Poly(oxy-1,2-ethandiyl), alpha-(carboxymethyl)-omega-((2-ethylhexyl)oxy)- in einer Menge von 0,5 Gew.-%, das Wasser in einer Menge zwischen 57,1 und 63,1 Gew.-%, und das Natriumhydroxid in einer Menge von 0,4 Gew.-%.

4. Verfahren nach Anspruch 3, wobei das Natriumhypochlorit in einer Menge vorliegt von 14 Gew.-% mit der Zusammensetzung umfassend das 5,5-Dimethylimidazolidin-2,4-dion in einer Menge von 6 Gew.-% und das Natriumbromid in einer Menge von 30 Gew.-%.

5. Verfahren nach einem der Ansprüche 1 bis 4, wobei in einem System für die Herstellung von Papier, der Nassbereich aus der Gruppe ausgewählt ist, bestehend aus Maschinenbütte, Wasser aus Siebunterseite, Zufuhrrohrleitungen zu Flotationseinheiten, und Rohrleitungen, die die Flotationseinheiten verlassen.

6. Verfahren nach einem der Ansprüche 1 bis 5, wobei in einem System zur Herstellung von Holzzellstoff, der Nassbereich aus der Gruppe ausgewählt ist, bestehend aus Lagerwasser und Eingangswasser.

## Revendications

1. Procédé pour réduire la contamination biologique de l'eau dans un système de production de papier et/ou de pâte de bois **caractérisé en ce qu'**il comprend l'étape de mélanger de l'hypochlorite de sodium dans une quantité inférieure à 1 : 5 avec une composition comprenant du 5,5-diméthyl-imidazolidin -2,4-dione, du bromure de sodium, du poly(oxy-1,2-éthanediyle) alpha-(carboxyméthyl)-oméga-((2-éthylhexyle)oxy)-, de l'eau et de l'hydroxyde de sodium dans un mélangeur relié directement à une extrémité mouillée dudit système de production de papier et/ou de pâte de bois, pour obtenir un oxydant à base de brome capable de libérer progressivement l'acide hypobromeux, évitant une augmentation excessive du potentiel redox du système de production de papier et/ou de pâte de bois.

2. Procédé selon la revendication 1, dans lequel ledit hypochlorite de sodium est mélangé dans une quantité comprise entre 0,1% et 40% en poids avec la dite composition comprenant ledit 5,5-diméthyl-imidazolidin-2,4-dione dans une quantité comprise entre 0,1% et 35% en poids et le dit bromure de sodium dans une quantité comprise entre 0,1% et 60% en poids, ledit poly(oxy-1,2-éthanediyle), alpha-(carboxyméthyl)-oméga-((2-éthylhexyle)oxy)- dans une quantité de 0,5% en poids, ladite eau dans une quantité comprise entre 57,1% et 63,1% en poids et ledit hydroxyde de sodium dans une quantité de 0,4% en poids.

3. Procédé selon la revendication 2, dans lequel ledit hypochlorite de sodium est mélangé dans une quantité comprise entre 5% et 33% en poids avec ladite composition comprenant ledit 5,5-diméthyl-imidazolidin-2,4-dione dans une quantité comprise entre 5 et 15% en poids et le dit bromure de sodium dans une quantité comprise entre 10% et 45% en poids, ledit poly(oxy-1, 2-éthanediyle), alpha-(carboxyméthyl)-oméga-((2-éthylhexyle)oxy)- dans une quantité de 0,5% en poids, ladite eau dans une quantité comprise entre 57,1% et 63,1% en poids et ledit hydroxyde de sodium dans une quantité de 0,4% en poids.

4. Procédé selon la revendication 3, ledit hypochlorite de sodium dans une quantité de 14% en poids avec ladite composition comprenant le dit 5,5-diméthyl-imidazolidi -2,4-dione dans une quantité de 6% en poids et le dit bromure de sodium dans une quantité de 30% en poids.

5. Procédé selon l'une quelconque des revendications 1 à 4, dans lequel dans un système de production de papier, ladite zone mouillée est choisie dans le groupe constitué par un cuvier de machine, des eaux de sous-bac, une tuyauterie d'alimentation d'unités de flottation et une tuyauterie sortant des unités de flottation.

6. Le procédé selon l'une quelconque des revendications 1 à 5, dans lequel dans un système de production de pâte de bois, ladite zone mouillée est choisie dans le groupe constitué par des eaux de stockage et des eaux d'entrée.
